Europäisches Patentamt

European Patent Office

Office européen des brevets

(11) Publication number: **0 266 000 B1**

## EUROPEAN PATENT SPECIFICATION

(45) Date of publication of patent specification: **23.10.91**   (51) Int. Cl.⁵: **A01B 33/08**

(21) Application number: **87202033.4**

(22) Date of filing: **22.10.87**

(54) **An agricultural implement.**

(30) Priority: **24.10.86 NL 8602667**

(43) Date of publication of application:
**04.05.88 Bulletin 88/18**

(45) Publication of the grant of the patent:
**23.10.91 Bulletin 91/43**

(84) Designated Contracting States:
**DE FR NL**

(56) References cited:
**DD-A- 35 049**
**GB-A- 853 796**
**GB-A- 1 413 672**
**GB-A- 2 023 387**
**US-A- 3 971 445**

(73) Proprietor: **C. van der Lely N.V.**
**Weverskade 10 P.O. Box 26**
**NL-3155 ZG Maasland(NL)**

(72) Inventor: **van der Lely, Cornelis**
**7 Brüschenrain**
**Zug(CH)**
Inventor: **van der Lely, Edwin**
**10A Weverskade**
**NL-3155 PD Maasland(NL)**

(74) Representative: **Mulder, Herman et al**
**Octrooibureau Van der Lely N.V. Weverskade**
**10 P.O. Box 26**
**NL-3155 ZG Maasland(NL)**

## Description

The invention relates to an agricultural implement, in particular a soil cultivating machine, comprising at least one power-driven soil working member and a drive including a speed variator which is provided with exchangeable gear wheels. An agricultural implement of the kind set forth is known from the US-A-3 971 445.

With agricultural implements of the known type, when the transmission ratio of the gear wheels in the speed variator is unknown, one is bound to establish the transmission ratio in use by removing part of the wall of the speed variator housing. This does not only involve a loss of time, but may also lead to a loss of oil.

When the construction according to the invention is used, it is no longer necessary to act as indicated above in checking the nature of the gear wheels and the speed variator.

According to the invention, this is achieved in that checking means are provided with the aid of which the nature of the gear wheel transmission in use can be established when the speed variator is closed, the said checking means including a window, through which at least part of one of the gear wheels in the speed variator is visible, and the window is provided with markings for determining the number of teeth on said gear wheel.

The DD-A-35 049 relates to a construction whereby a unit comprising two gear wheels can be detached and redetached in an other position so as to achieve a speed variation. The unit is provided with checking means by means of which an electrical circuit can be activated that corresponds with the chosen speed.

For a better understanding of the invention and to show how the same may be carried into effect, reference will now be made, by way of example, to the accompanying drawings, in which:

Figure 1 is a plan view of an agricultural implement, in particular a soil cultivating machine, comprising a drive according to the invention;

Figure 2 is, to an enlarged scale, a view taken in the direction of the arrow II in Figure 1;

Figure 3 is, to an enlarged scale, a view taken in the direction of the arrow III in Figure 1;

Figure 4 is a view taken on the line IV - IV in Figure 2;

Figure 5 is a view taken in the direction of the arrow V in Figure 4, a cover belonging to the speed variator having been removed;

Figure 6 is a view taken on the line VI - VI in Figure 3, and

Figure 7 is, to an enlarged scale, a view taken in the direction of the arrow VII in Figure 4.

The implement shown in the drawings relates to a soil cultivating machine, in particular one for the preparation of a seed bed. The machine comprises a box-like frame portion 1 extending transversely to the direction of operative travel A and wherein at equal interspaces of preferably substantially 25 cms the upwardly directed, preferably at least substantially vertical, shafts 2 of soil working members 3 are supported. Each of the soil working members 3 includes an at least substantially horizontally extending carrier 4 which is fitted on the end of a shaft 2 projecting from the bottom of the frame portion 1, and at its ends is provided with downwardly extending soil working elements 5 afforded by tines. The ends of the box-like frame portion 1 are closed by upwardly directed plates 6, which extend at least substantially parallel to the direction of operative travel A. Each of the plates 6 is provided near its front side with a pin 7 which extends transversely to the direction of operative travel A, the arrangement being such that the pins 7 are in alignment. An arm 8 extending rearwardly along the inner side of a plate 6 is freely pivotal about each of the pins 7. Near the rear side of the frame portion 1 there are provided adjusting means which are preferably constituted by a threaded spindle 9, by means of which the arms 8 are adjustable to and are lockable into a plurality of positions. A roller 10, which in this embodiment is provided at its periphery with rod-shaped elements extending in the longitudinal direction, is provided freely rotatably between the ends of the arms 8. Inside the b ox-like frame portion 1, each of the shafts 2 of a soil working member 3 is provided with a spur gear 11, the arrangement being such that the gear wheels 11 on the shafts 2 of adjacent soil working members 3 are in driving connection.

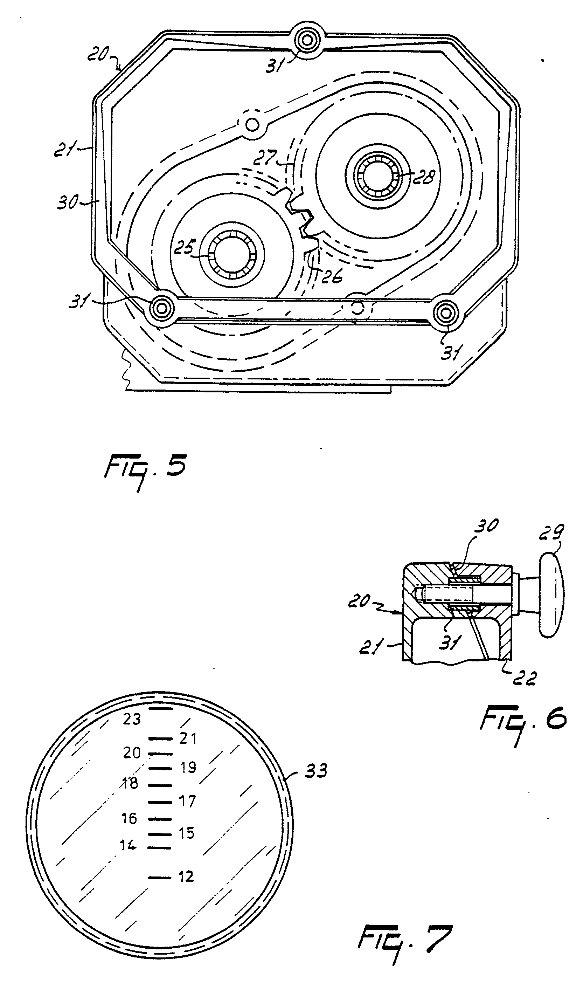

Near the centre of the row of soil working members 3, which row in this embodiment comprises twelve soil working members, the shaft of a soil working member is upwardly extended and reaches by means of the extension 12 into a gear box 13. The gear box 13 is supported by means of a supporting section 14 which is bolted to the upper side of the box-like frame portion 1 by means of bolts 15. The supporting section 14 extends conically in the upward direction (Figure 4) and at its periphery is provided with stiffening ribs 16 which are arranged uniformly distributed between a base plate and an upper plate of the supporting section. By means of bearings 17, the extension 12 is supported on the upper side of the supporting section 14. The gear box 13 is bolted to the upper plate of this supporting section 14 by means of bolts 18. As will be apparent from Figure 2, the gear box has sides which extend in the direction of operative travel A and, seen in a direction away from the supporting section 14, slightly converge in the upward direction and each merge at a different level into an obliquely sidewardly directed wall portion, which wall portions extend substantially parallel and each merge into a wall portion extending at least substantially perpendicularly to the two wall portions. Said first wall portions enclose an angle of approximately 30° with a horizontal plane. At the sides extending in the direction of operative travel, the gear box 13 is provided with interspaced consecutive cooling fins 19. At its rear side, the gear box 13 is fitted with a speed variator 20 which includes an aluminium housing 21, which housing, in a rear view (Figure 3), is rectangular having bevelled corners. At its rear side, the housing 21 is provided with an aperture which can be closed by means of a cover 22. The extension 12 of the shaft 2 of the above-mentioned soil working member 3 reaches to into the gear box 13 and therewithin is in driving connection via a bevel gear wheel transmission 23, 24 with a shaft 25 which extends in the direction of operative travel A and is located at the level of the upper sides of the converging upright sides of the gear box 13 (Figure 2). At the rear side, the shaft 25 reaches to inside the housing 21 of the speed variator 20 and is fitted therein with a gear wheel 26. The gear wheel 26 is in driving connection with a gear wheel 27 on a shaft 28 provided in the upper side of the gear box 13. At the front and rear sides, the shaft 28 projects from the gear box and the speed variator 20, respectively (Figure 4). The shafts 25 and 28 are arranged such that a line through the longitudinal centre lines extends at least substantially parallel to the oblique wall portions of the gear box 13 (Figure 2). The gear wheels 26, 27 on the shafts 25, 28 are arranged such that they are easily accessible via the at least substantially rectangular aperture at the rear side of the housing 21 of the speed variator and can be replaced by gear wheels having a different transmission ratio. The cover 22, by means of which the at least substantially rectangular aperture at the rear side of the housing 21 of the speed variator 20 can be closed, is provided for the purpose near the midway point of the upper side and near the corners at the bottom side with bolts 29 which can be loosened and tightened by hand and can co-operate with thread in apertures provided in the wall of the housing 21 (Figure 3). The aperture has a flat edge which extends at least substantially parallel to a plane inclining forwardly at an angle of approximately 60° (Figure 4) and which can co-operate with a corresponding edge of the cover 22 via an interposed gasket 30. As is apparent from Figure 5, the gasket 30 is provided with a widened portion in the region of the manually tightable bolts 29. The gasket 30 tapers upwardly, the widened portion for the uppermost bolt 29 becoming narrower at both sides. In the respective apertures for the bolts 29 there are provided spacer bushings 31 (Figure 6) which ensure that, on tightening the bolts, the gasket 30 is not clamped excessively, as a result of which its effect would get lost. At the level of the upper shaft 28 and preferably straight above the lower shaft 25, the cover 22 is provided with a circular aperture 32, which aperture has a diameter of approximately 6 cms and is identical to that provided in the cover for the shaft 28. Both apertures are symmetrical relative to a vertical plane in the direction of operative travel through the centre of the cover 22. Transparent material 33, which preferably consists of glass preserving its transparency in substantially any conditions, is provided in said aperture 32. The transparent material forms one integral whole with an edge bearing against the inner side of the aperture 32 (Figure 4), the said integral whole being dimensioned such that it exactly fits therein. The material 33 is fixed by means of an adhesive, e.g. "Loctite 381", having such an elasticity that it is capable of adapting itself to materials of varying coefficients of expansion, so that no leakage can occur. The material 33 covering the aperture 32 constitutes a window which is provided with markings located one above the other and numbered 12, 14, 15, 16, 17, 18, 19, 20, 21 and 23 (Figure 7). Each of the markings indicates the top side of a tooth of a gear wheel provided on the lower shaft and, by means of its number, also the number of teeth on said gear wheel. With the aid of a table, it is then possible to establish with which gear wheel on the shaft 28 the relevant gear wheel cooperates. The above-marked window 33 thus constitutes a checking means, by means of which the current transmission can be determined in a simple way without it being necessary for the cover 22 to be removed.

The front side of the frame portion 1 is provided with a triangular trestle 34, which is arranged such that, seen in the direction of operative travel, the gear box 13 is located within the triangle of said trestle 34. The trestle 34 includes a three-point connection for coupling to the three-point lifting hitch of a tractor.

The machines described in the foregoing operates as follows.

The use of the specific construction of the gear box 13, as described in the foregoing, achieves that the shaft 28 is located exactly in the centre, i.e. in the extension of the power take-off shaft of the tractor, so that a minimum loading of the intermediate shaft is produced during operation.

In order to render it possible to arrange the shaft 28 centrally with the same direction of rotation as the driven extension 12, a gear box being the mirror image of the gear box 13 is used for machines having a working width which differs from that in the embodiment shown, e.g. for a machine having ten soil working members 3. For both gear boxes the same speed variator 20 can be used. When said latter gear box is used, the shaft 28 is then located in the aperture 32 of the cover 22 and the window 33 in said other aperture.

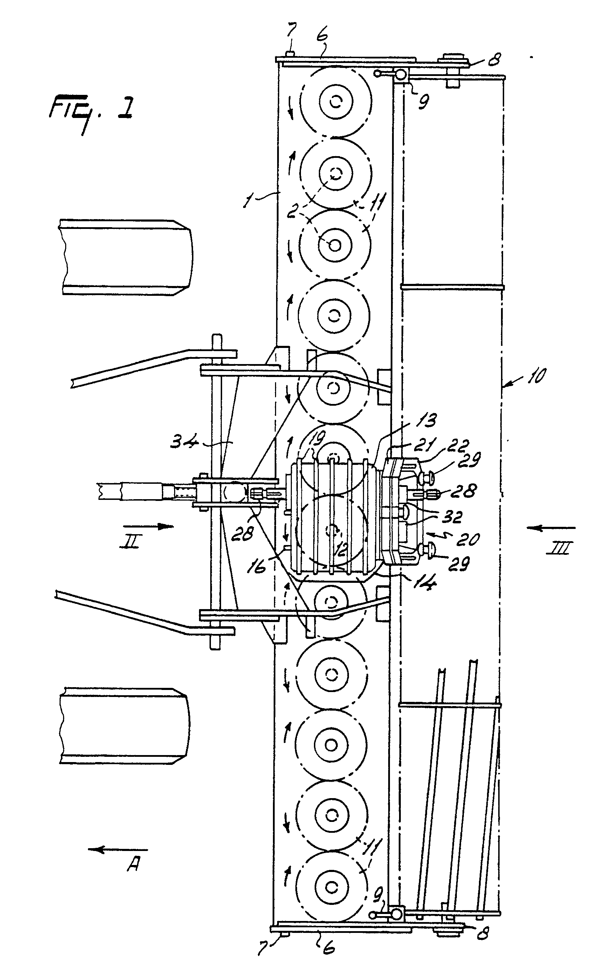

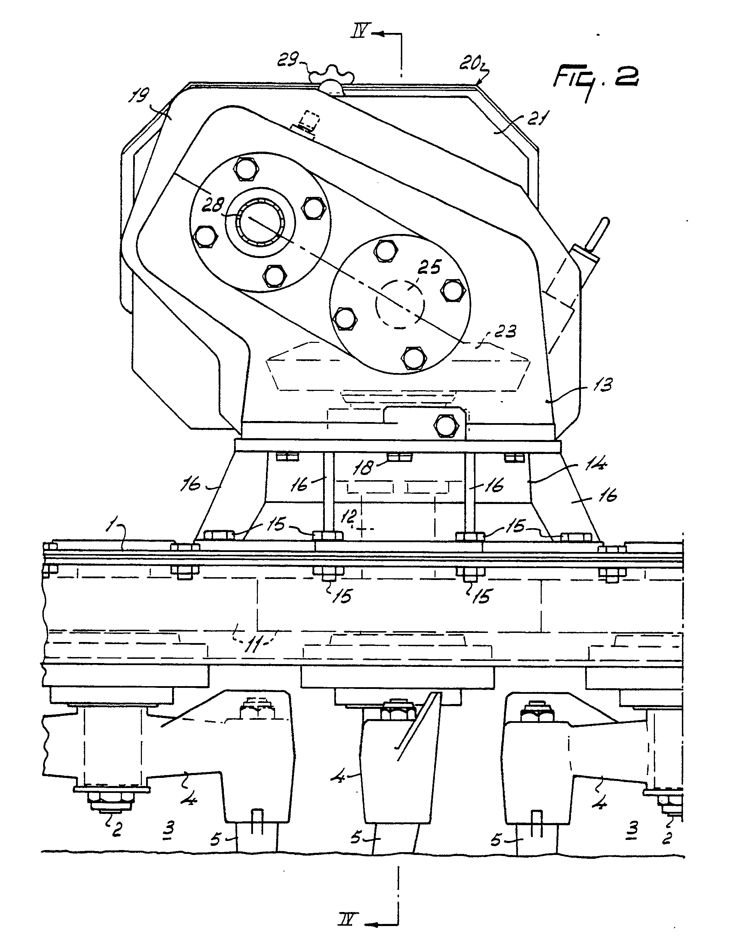

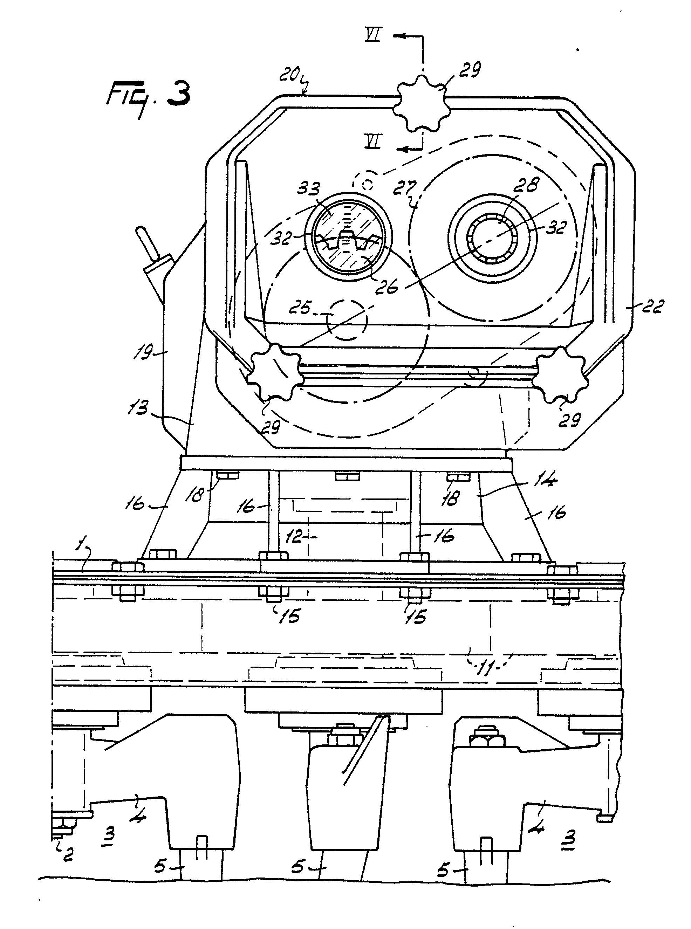

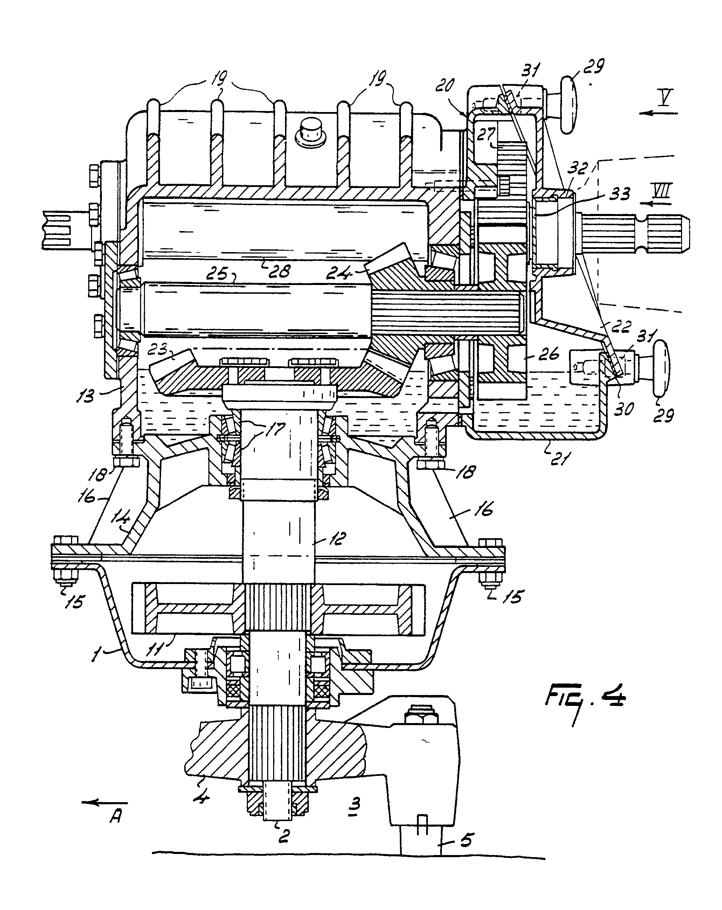

During operation, the machine is connected to the three-point lifting hitch of a tractor by means of the trestle 34, and the shaft 28 projecting at the front side from the gear box 13 is connected to the power take-off shaft of the tractor via an intermediate shaft. Hereby, the soil working members 3 are driven in such a manner via the gear wheels 26 and 27 of the speed variator 20 provided at the rear side of the gear box 13 and the gear wheels 11 located in the box-like frame portion 1 that adjacent soil working members 3 rotate in opposite directions, whereby the downwardly extending elements 5 cultivate at least adjoining strips of soil. Before starting operations, the desired working depth of the working members can be set with the aid of the roller 10, which is located behind the soil working members 3 and is adjustable in height relative to the frame portion 1 by means of the threaded spindles 9 and the arms 8. Using the above-described specific gear box 13 or its mirror-inverted variant, it can be achieved that, whilst maintaining the desired direction of rotation of the driven soil working member (Figure 1), the shaft 28, which projects from the front of the gear box and is to be coupled to the power take-off shaft of the tractor, is located exactly in the extension of said power take-off shaft, i.e. in the region of the machine centre. As has been described in the foregoing, via the window 33 provided in the cover 22 of the speed variator 20 and located in the region of the shaft 28 to be driven and above the lower shaft 25 and, as is apparent from Figure 4, disposed quite near to a gear wheel 26, it is possible to establish immediately the transmission ratio in use without removal of said cover 22. This can be done since it is possible to determine the number of teeth of the gear wheel mounted on the lower shaft 25 with the aid of the numbers going with the markings, it being furthermore possible to establish with the aid of a table which gear wheel is present on the shaft 28 to be driven. By means of the widened portion of the gasket 30 in the region of the bolts 29, it can be accomplished that said gasket is subjected to the least possible extent of deformation. The use of the spacer bushings 31 accomplishes that the gasket 30 cannot be deformed by overtightening of the bolts 29.

## Claims

1. An agricultural implement, in particular a soil cultivating machine, comprising at least one power-driven soil working member (3) and a drive including a speed variator (20) which is provided with exchangeable gear wheels (26, 27), characterized in that checking means are provided with the aid of which the nature of the gear wheel transmission in use can be established when the speed variator (20) is closed, the said checking means including a window (33), through which at least part of one of the gear wheels (26) in the speed variator (20) is visible, and the window is provided with markings for determining the number of teeth on said gear wheel (26).

2. An agricultural implement as claimed in claim 1, characterized in that the window (33) is fitted into an aperture (32) by means of a suitable adhesive.

3. An agricultural implement as claimed in claim 1 or 2, characterized in that the window (33) is located at the rear side of the speed variator (20).

4. An agricultural implement as claimed in any one of claims 1 to 3, characterized in that the window (33) is provided in a removable cover (22) of the speed variator (20).

5. An agricultural implement as claimed in claim 4, characterized in that the said cover (22) has two apertures (32) which are provided symmetrically relative to a plane through the centre of the cover.

6. An agricultural implement as claimed in claim 5, characterized in that a window (33) or a driven shaft (28), respectively, can be provided in each of the said apertures (32).

7. An agricultural implement as claimed in any one of claims 4 to 6, characterized in that a gasket (30), which in the region of the fastening means for the said cover (22) contains more material than elsewhere, is located between the wall of a housing (21) of the speed variator (20) and the said removable cover (22).

8. An agricultural implement as claimed in any one of the preceding claims, characterized in that the speed variator (20) is located at the rear side of a gear box (13) having sides which extend in the direction of operative travel of the machine and wall portions which extend at least substantially parallel to each other and enclose an acute angle with the horizontal, the arrangement being such that, in a plan view the ingoing shaft (28) driven by a tractor is disposed straight behind the power take-off shaft of the tractor and, in a plan view, next to the shaft (2) of a directly driven soil working member (3).

9. An agricultural implement as claimed in claim 8, characterized in that the sides of the gear box (13) are provided with the cooling fins (19) which are disposed one behind the other.

10. An agricultural implement as claimed in claim 8 or 9, characterized in that a plurality of soil working members (3) are drivable about upwardly directed shafts (2) and are arranged in a row extending transversely to the direction of operative travel, and the ingoing shaft (28) of the gear box (13) is located at least substantially halfway between two adjacent soil working members (3), whilst an extended shaft (12) of a soil working member (3) extends to into the gear box (13), the arrangement being such that, seen in a plan view, said extended shaft (12) is given a left-hand rotation.

## Revendications

1. Machine agricole, en particulier machine pour cultiver le sol, comprenant au moins un organe motorisé (3) pour travailler le sol et un entraînement comportant un variateur de vitesse (20) muni d'engrenages interchangeables (26, 27), **caractérisée** en ce que des moyens de vérification sont prévus à l'aide desquels la nature de la transmission à engrenages en service peut être établie quand le variateur de vitesse (20) est fermé, lesdits moyens de vérification comprenant une fenêtre (33) à travers laquelle est visible au moins une partie d'un des engrenages (26) dans le variateur de vitesse (20), la fenêtre étant munie de marquages pour déterminer le nombre de dents sur ledit engrenage (26).

2. Machine agricole selon la revendication 1, caractérisée en ce que la fenêtre (33) est ajustée dans une ouverture (32) au moyen d'un adhésif approprié.

3. Machine agricole selon la revendication 1 ou 2, caractérisée en ce que la fenêtre (33) est située sur le côté postérieur du variateur de vitesse (20).

4. Machine agricole selon l'une quelconque des revendications 1 à 31 caractérisée en ce que ·la fenêtre (33) est prévue dans un couvercle amovible (22) du variateur de vitesse (20).

5. Machine agricole selon la revendication 4, caractérisée en ce que ledit couvercle (22) a deux ouvertures (32) qui sont prévues symétriquement par rapport à un plan passant par le centre du couvercle.

6. Machine agricole selon la revendication 5, caractérisée en ce qu'une fenêtre (33) ou un arbre mené (28), respectivement, peut être prévu(e) dans chacune desdites ouvertures (32).

7. Machine agricole selon l'une quelconque des revendications 4 à 6, caractérisée en ce qu'un joint d'étanchéîté (30), qui contient plus de matière dans la région des moyens de fixation pour ledit couvercle (22) que par ailleurs, est situé entre la paroi d'un boîtier (21) du variateur de vitesse (20) et ledit couvercle amovible (22).

8. Machine agricole selon l'une quelconque des revendications précédentes, caractérisée en ce que le variateur de vitesse (20) est situé sur le côté postérieur d'une boîte d'engrenages (13) ayant des côtés qui s'étendent dans le sens de marche du travail de la machine, et des parties de parois qui s'étendent au moins sensiblement parallèlement l'une à l'autre et forment un angle aigu avec l'horizontale, l'agencement étant tel que, dans une vue en plan, l'arbre d'entrée (28) entraîné par un tracteur est disposé en ligne droite derrière l'arbre de prise de force du tracteur et, dans une vue en plan, jouxtant l'arbre (2) d'un organe de travail du sol (3) entraîné directement.

9. Machine agricole selon la revendication 8, caractérisée en ce que les côtés de la boîte d'engrenages (13) sont munis des ailettes de refroidissement (19) qui sont disposées l'une derrière l'autre.

10. Machine agricole selon la revendication 8 ou 9, caractérisée en ce qu'une pluralité d'organes de travail du sol (3) peuvent être entraînés autour d'arbres (2) dirigés vers le haut et sont disposés en une rangée s'étendant transversalement au sens de marche du travail, et l'arbre d'entrée (28) de la boîte d'engrenages (13) est situé au moins sensiblement à mi-distance entre deux organes de travail du sol (3) adjacents, tandis qu'un arbre prolongé (12) d'un organe de travail du sol (3) s'étend jusque dans la boîte d'engrenages (13), l'agencement étant tel que, vu en plan, ledit arbre prolongé (12) est entraîné en rotation en tournant à gauche.

## Patentansprüche

1. Landwirtschaftliches Gerät, insbesondere Bodenbearbeitungsmaschine, mit mindestens einem kraftangetriebenen Bodenbearbeitungsglied (3) und einem Antrieb, der einen Geschwindigkeits-Variator (20) aufweist, welcher mit auswechselbaren Zahnrädern (26, 27) versehen ist, dadurch gekennzeichnet, daß eine Prüfeinrichtung vorgesehen ist, mit deren Hilfe die Eigenschaft der in Betrieb befindlichen Zahnradübersetzung bei geschlossenem Geschwindigkeits-Variator (20) festzustellen ist, daß die Prüfeinrichtung ein Fenster (33) aufweist, durch welches mindestens ein Teil eines der Zahnräder (26) des Geschwindigkeits-Variators (20) sichtbar ist, und daß das Fenster Markierungen zur Ermittelung der Zähnezahl des genannten Zahnrades (26) aufweist.

2. Landwirtschaftliches Gerät nach Anspruch 1, dadurch gekennzeichnet, daß das Fenster (33) in einer Öffnung (32) mittels eines geeigneten Klebers angebracht ist.

3. Landwirtschaftliches Gerät nach Anspruch 1 oder 2, dadurch gekennzeichnet, daß das Fenster (33) an der Rückseite des Geschwindigkeits-Variators (20) angeordnet ist.

4. Landwirtschaftliches Gerät nach einem der Ansprüche 1 bis 3, dadurch gekennzeichnet, daß das Fenster (33) in einem abnehmbaren Deckel (22) des Geschwindigkeits-Variators (20) vorgesehen ist.

5. Landwirtschaftliches Gerät nach Anspruch 4, dadurch gekennzeichnet, daß der Deckel (22) zwei Öffnungen (32) aufweist, die symmetrisch zu einer durch die Mitte des Deckels gehenden Ebene vorgesehen sind.

6. Landwirtschaftliches Gerät nach Anspruch 5, dadurch gekennzeichnet, daß in jeder der genannten Öffnungen (32) jeweils ein Fenster (33) oder eine Welle (28) anzuordnen ist.

7. Landwirtschaftliches Gerät nach einem der Ansprüche 4 bis 6, dadurch gekennzeichnet, daß zwischen der Wandung eines Gehäuses (21) des Geschwindigkeits-Variators (20) und dem abnehmbaren Deckel (22) eine Dichtung (30) angeordnet ist, die nahe der Befestigung des Deckels (22) mehr Werkstoff aufweist als im übrigen Bereich.

8. Landwirtschaftliches Gerät nach einem der vorhergehenden Ansprüche, dadurch gekennzeichnet, daß der Geschwindigkeits-Variator (20) an der Rückseite eines Getriebegehäuses (13) angeordnet ist, das in Arbeitsrichtung der Maschine ausgerichtete Seiten und Wandteile aufweist, die wenigstens im wesentlichen zueinander parallel sind und mit der Horizontalen einen spitzen Winkel einschließen, wobei die Anordnung derart getroffen ist, daß die von einem Schlepper angetriebene Eingangswelle (28) in Draufsicht fluchtend mit und hinter der Schlepperzapfwelle und nahe der Welle (2) eines direkt angetriebenen Bodenbearbeitungsgliedes (3) liegt.

9. Landwirtschaftliches Gerät nach Anspruch 8, dadurch gekennzeichnet, daß die Seiten des Getriebegehäuses (13) mit hintereinander angeordneten Kühlrippen (19) versehen sind.

10. Landwirtschaftliches Gerät nach Anspruch 8 oder 9, dadurch gekennzeichnet, daß eine Mehrzahl von Bodenbearbeitungsgliedern (3) um aufwärts gerichtete Wellen (2) antreibbar und in einer Reihe quer zur Arbeitsrichtung angeordnet sind, und daß die Eingangswelle (28) des Getriebegehäuses (13) mindestens im wesentlichen mittig zwischen zwei benachbarten Bodenbearbeitungsgliedern (3) angeordnet ist und eine verlängerte Welle (12) eines Bodenbearbeitungsgliedes (3) bis in das Getriebegehäuse (13) ragt, wobei die Anordnung so getroffen ist, daß die verlängerte Welle (12) in Draufsicht linksdrehend angetrieben wird.

FIG. 1

FIG. 2

FIG. 3

FIG. 4

**FIG. 5**

**FIG. 6**

**FIG. 7**